# EUROPÄISCHE PATENTSCHRIFT

(11) **EP 3 688 659 B1**
(45) Veröffentlichungstag und Bekanntmachung des Hinweises auf die Patenterteilung: **13.08.2025**
(21) Anmeldenummer: 18759604.4
(22) Anmeldetag: 22.08.2018
(51) Int. Cl.: G06V 20/58, G08G 1/01, G08G 1/14

(54) **VERFAHREN ZUM AUTOMATISIERTEN IDENTIFIZIEREN VON PARKFLÄCHEN UND/ODER NICHT-PARKFLÄCHEN**
METHOD FOR AUTOMATICALLY IDENTIFYING PARKING AREAS AND/OR NON-PARKING AREAS
PROCÉDÉ D'IDENTIFICATION AUTOMATISÉE DES SURFACES DE STATIONNEMENT ET/OU DES SURFACES DE NON STATIONNEMENT

(30) Priorität: 27.09.2017 DE 102017217169
(43) Veröffentlichungstag der Anmeldung: 05.08.2020
(73) Patentinhaber: Robert Bosch GmbH, 70442 Stuttgart (DE)
(72) Erfinder: ZAUM, Daniel, 31157 Sarstedt (DE); MAYER, Philipp, 70176 Stuttgart (DE); SCHICK, Thorben, 37181 Hardegsen (DE)
(86) Internationale Anmeldenummer: PCT/EP2018/072615
(87) Internationale Veröffentlichungsnummer: WO 2019/063208

(56) Entgegenhaltungen:
- DE-A1- 102015 207 804
- DE-B4- 102015 207 804
- US-A1- 2017 243 486

## Beschreibung

Die Erfindung betrifft ein Verfahren zum automatisierten Identifizieren von Parkflächen und/oder Nicht-Parkflächen sowie Vorrichtung und Computerprogramm.

### Stand der Technik

Die Erfindung betrifft ein Verfahren zum automatisierten Identifizieren von Parkflächen und/oder Nicht-Parkflächen. Weitere Aspekte der Erfindung betreffen ein Computerprogramm, eine zentrale Computereinrichtung sowie eine Vorrichtung, die zur Durchführung des Verfahrens eingerichtet sind.

Angesichts einer Zunahme des Automatisierungsgrades von Fahrzeugen werden immer komplexere Fahrerassistenzsysteme eingesetzt. Für solche Fahrerassistenzsysteme und Funktionen, wie z.B. dem hochautomatisierten Fahren oder dem vollautomatisierten Fahren, wird eine große Zahl von Sensoren im Fahrzeug benötigt, die eine exakte Erfassung des Fahrzeugumfelds ermöglichen.

Zur Erfassung des Fahrzeugumfelds zählen unter anderem Verfahren zum automatisierten Identifizieren von Parkflächen und/oder Nicht-Parkflächen.

Im Automobilbereich werden ferner verschiedene Fahrerassistenzsysteme eingesetzt, die den Fahrer beim Ausführen verschiedener Fahrmanöver unterstützen sollen. Dazu gehören beispielsweise Parkassistenzsysteme, die mit Hilfe von dem Fahrzeug zugeordneten Sensoren die Umgebung erfassen, in der Umgebung mögliche Parkplätze ermitteln und den Fahrer beim Einparken unterstützen. Des Weiteren sind im Stand der Technik Fahrerassistenzsysteme bekannt, die den Fahrer beim Auffinden geeigneter freier Parkplätze unterstützen.

Im Folgenden werden unter höher automatisiert all diejenigen Automatisierungsgrade verstanden, die im Sinne der Bundesanstalt für Straßenwesen (BASt) eine automatisierte Längs- und Querführung mit steigender Systemverantwortung entsprechen, z.B. das hoch- und vollautomatisierte Fahren.

Im Stand der Technik sind verschiedene Verfahren bekannt, Distanzen eines Fahrzeugs zu Objekten mithilfe von distanzbasierten Sensoren (z.B. Ultraschall-, Radar-, Laser-, Video-, Lidarsensoren) zu ermitteln.

Ein Übertragen von Parklückendaten zu einem Server ist beispielsweise aus DE 10 2004 062 021 A1, DE 10 2009 028 024 A1, DE 10 2008 028 550 A1, US2017/243486 A1, und DE 102015207804 A1bekannt.

So offenbart die DE 10 2004 062 021 A1 ein System zur Nutzung freier Parklücken. Dabei ist vorgesehen, dass Verkehrsteilnehmer Lage und Abmessung freier Parklücken während der Vorbeifahrt ermitteln und die so gesammelten Daten zu einer Zentrale übertragen. Diese Daten /werden von der Zentrale parkplatzsuchenden Verkehrsteilnehmern zur Verfügung gestellt.

Aus der DE 10 2009 028 024 A1 ist ein Parkleitsystem und ein Navigationsgerät zur Navigation eines parkplatzsuchenden Fahrzeuges zu einem freien Parkplatz bekannt. Dabei werden Informationen über verfügbare, freie Parkplätze durch im Verkehr befindliche Fahrzeuge ausgeforscht, die Informationen direkt dem parkplatzsuchenden Fahrzeug oder indirekt über eine Zentrale dem parkplatzsuchenden Fahrzeug übermittelt.

Es ist eine Aufgabe der vorliegenden Erfindung, ein verbessertes Verfahren zum automatisierten Identifizieren von Parkflächen und/oder Nicht-Parkflächen bereitzustellen.

### Offenbarung der Erfindung

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt der Erfindung wird ein Verfahren zum automatisierten Identifizieren von Parkflächen und/oder Nicht-Parkflächen bereitgestellt, umfassend die folgenden Schritte:

| | |
|---|---|
| S1 | Durchführen mehrerer Durchfahrten, zumindest jedoch zweier Durchfahrten, durch zumindest einen Straßenabschnitt mit zumindest einem Messfahrzeug; |
| S2 | Erfassen von Parklückendaten entlang des Straßenabschnitts während jeder Durchfahrt mittels zumindest einem Sensor des zumindest einen Messfahrzeugs, wobei die Parklückendaten Parklückendetektionen sowie jeweils zugeordnete Orts- und Zeitinformationen umfassen; |
| S3 | Akkumulierung der während einer jeden Durchfahrt erfassten Parklückendaten in einem Datensatz; |
| S4 | Ermittlung einer zeitlichen Änderungsrate von Parklückendetektionen anhand des Datensatzes; und |
| S5 | Ermittlung von gültigen Parkflächen und/oder Nicht-Parkflächen entlang des Straßenabschnitts auf Grundlage der zeitlichen Änderungsrate verschiedener Parklückendetektionen, |

Auf diese Weise werden im Schritt S1 durch das Messfahrzeug kontinuierlich Parklücken zwischen zwei Fahrzeugen gemessen und detektiert, wobei im Schritt S2 Parklückendaten entlang des Straßenabschnitts während jeder Durchfahrt mittels zumindest einem Sensor erfasst werden, wobei die Parklückendaten Parklückendetektionen sowie jeweils zugeordnete Orts- und Zeitinformationen umfassen.

Eine weitere vorteilhafte Weiterbildung des Verfahrens sieht vor, dass die Befahrungen des Straßenabschnitts in unterschiedlichen Fahrtrichtungen durchgeführt werden, wobei die Parklückendaten entlang des Straßenabschnitts während jeder Durchfahrt in den unterschiedlichen Fahrtrichtungen korreliert werden. Auf diese Weise kann beispielsweise die Ermittlung der Parklückendaten aufgrund der entgegen gerichteten Befahrungen des Straßenabschnitts vorteilhaft noch genauer durchgeführt werden.

Die Parklückendaten werden sogenannten Bins zugeordnet, wobei ein Bin einen definierten Abschnitt entlang des Straßenabschnittes bezeichnet, und wobei die Zuordnung einer Parklückendetektion zu einem Bin insbesondere anhand der der jeweiligen Parklückendetektion zugeordneten Ortsinformation erfolgt.

Bevorzugterweise ist die Länge der Bins dabei frei konfigurierbar. So kann beispielsweise als Länge eine mittlere Fahrzeuglänge von fünf Metern gewählt werden. Dabei ist eine weitere vorteilhafte Weiterbildung des Verfahrens vorteilhaft, bei der die Parklückendaten für eine definierte Länge des Straßenabschnitts ermittelt werden. Auf diese Weise können zeitliche Änderungsraten der Parklückendetektionen für selektiv ausgewählte Bereiche erstellt werden.

Die zeitliche Änderungsrate der Parklückendetektionen gemäß Schritt S4 wird für jeweils in einem Bin zusammengefasste Parklückendetektionen gemeinsam ermittelt, sodass als Ergebnis dieser Ermittlung jedem Bin eine zeitliche Änderungsrate zugeordnet ist, die sich aus den zeitlichen Änderungsraten der in dem Bin zusammengefassten Parklückendetektionen ergibt.

Dabei repräsentiert die zeitliche Änderungsrate den Grad der zeitlichen Stabilität von Flächenbelegungen, etwa parkenden Autos, wobei bei zeitlich konstanten Ereignissen, wie sie typisch für Nicht-Parkflächen sind, die zeitliche Änderungsrate gering ist und im Falle von Parkflächen, die einem häufigen Belegungswechsel unterliegen, die zeitliche Änderungsrate hoch ist.

Für das weitere Vorgehen ist in der Erfindung vorteilhafterweise vorgesehen, dass der Schritt der Ermittlung von gültigen Parkflächen und/oder Nicht-Parkflächen entlang des Straßenabschnitts (S5) anhand der zeitlichen Änderungsrate der jeweiligen Bins erfolgt, wobei ein jeweiliger Bin anhand der ihm zugeordneten zeitlichen Änderungsrate von Parklückendetektionen als Parkfläche oder als Nicht-Parkfläche klassifiziert wird.

So kann beispielsweise die zeitliche Änderungsrate um die Anzahl an Durchfahrten durch eine Straße normiert werden. Ist die zeitliche Änderungsrate niedrig, liegt bei fast jeder Durchfahrt in diesem Bin eine Parklückendetektion vor. Ist die zeitliche Änderungsrate hoch, treten Parklückendetektionen nur sporadisch und zeitlich unregelmäßig auf. Entsprechend können anhand dieses Verfahrens Nicht-Parkflächen (z.B. eine Hofeinfahrt, eine Parkverbotszone oder eine Baumfläche) und Parkflächen ermittelt und voneinander getrennt werden.

In der Erfindung werden die Parklückendetektionen sowie die Parkflächen und/oder Nicht-Parkflächen in eine digitale Parkraumkarte eingearbeitet, wobei beispielsweise als Nicht-Parkflächen eine Hofeinfahrt, eine Parkverbotszone, eine T-Straßenkreuzung und/oder eine Baumfläche registriert werden können.

In einer weiteren Ausführungsform der Erfindung beinhaltet das Verfahren, dass der in Schritt S2 zum Erfassen von Parklückendaten verwendete Sensors nach einem distanzbasierten Messverfahren arbeitet.

Für das weitere Vorgehen ist es in einer Ausführungsform der Erfindung vorteilhafterweise vorgesehen, dass die in Schritt S3 durchgeführte Akkumulierung wenigstens teilweise lokal in dem Messfahrzeug und/oder wenigstens teilweise in einer zentralen Servereinrichtung erfolgt. Auf diese Weise kann auf der Servereinrichtung langfristig eine große historische Datenmenge aggregiert werden, die eine hohe Aktualität und Genauigkeit der Parklückendaten repräsentieren.

Vorteilhafterweise werden die die ermittelten zeitlichen Änderungsraten der Parklückendetektionen dazu verwendet, eine Parametrierung von clusterbasierten Verfahren zum Lernen von Parkflächen und Nicht-Parkflächen zu wählen.

Einen weiteren Gegenstand der Erfindung bildet eine Vorrichtung zum automatisierten Identifizieren von Parkflächen und/oder Nicht-Parkflächen, aufweisend ein Messfahrzeug mit zumindest einem Sensor, wobei mittels dem Sensor Daten bezüglich eines Parkraums entlang des Straßenabschnitts während jeder Durchfahrt erfassbar sind, ferner aufweisend eine Steuereinrichtung, wobei die Steuervorrichtung dazu ausgelegt ist, ein Verfahren nach einem der Ansprüche 1 bis 5 durchzuführen.

Bevorzugterweise weist das Messfahrzeug wenigstens eine Kommunikationseinrichtung zum Übermitteln der Daten an eine Servereinrichtung auf.

In einer besonders bevorzugten Ausführungsform ist der Sensor als Ultraschallsensor oder Radarsensor ausgeführt ist.

Ferner bildet auch ein Computerprogramm, umfassend Programmcodemittel zur Durchführung des Verfahrens nach einem der Ansprüche 1 bis 5, wenn das Computerprogramm auf einer Vorrichtung zum automatisierten Identifizieren von Parkflächen und/oder Nicht-Parkflächen ausgeführt wird, einen Gegenstand der Erfindung.

Obwohl die vorliegende Erfindung im Folgenden hauptsächlich in Zusammenhang mit Personenkraftwagen beschrieben wird, ist sie darauf nicht beschränkt, sondern kann mit jeder Art von Fahrzeug Lastkraftfahrzeuge (LKW) und/oder Personenkraftwagen (PKW) genutzt werden.

Weitere Merkmale, Anwendungsmöglichkeiten und Vorteile der Erfindung ergeben sich aus der nachfolgenden Beschreibung eines Ausführungsbeispiels der Erfindung, welche in der Figur dargestellt ist. Dabei ist zu beachten, dass die dargestellten Merkmale nur einen beschreibenden Charakter haben und auch in Kombination mit Merkmalen anderer oben beschriebener Weiterentwicklungen verwendet werden können und nicht dazu gedacht sind, die Erfindung in irgendeiner Form einzuschränken.

### Zeichnungen

Die Erfindung wird im Folgenden anhand eines bevorzugten Ausführungsbeispiels näher erläutert, wobei für gleiche Merkmale gleiche Bezugszeichen verwendet werden. Die Zeichnung ist schematisch und zeigt:

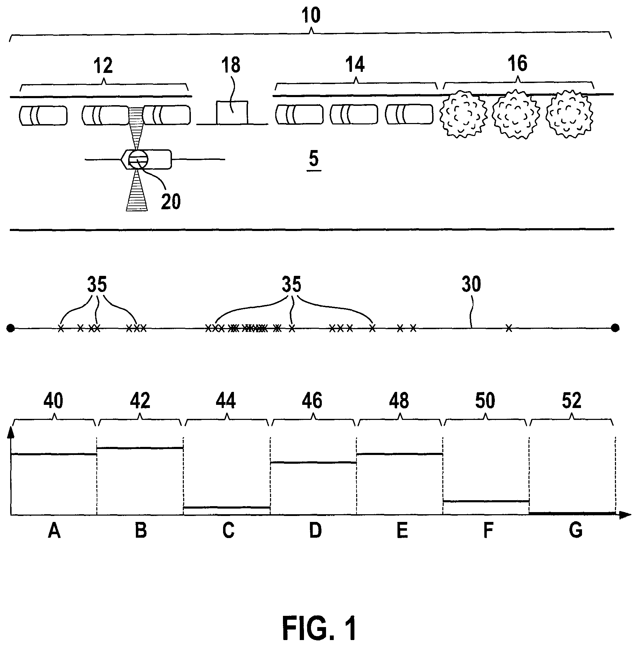

- Fig. 1: eine schematische Ansicht eines Straßenabschnittes mit zugeordneten Parklückendetektionen und Einordnung derselben in bins.

Figur 1 zeigt in ihrem oberen Bereich einen Straßenabschnitt 10 mit einer Fahrbahn 12. An einem Rand der Fahrbahn 5 befinden sich in bestimmten Bereichen 12 und 14 parkende Fahrzeuge. In einem Bereich 16 ist eine Baumfläche am Fahrbahnrand angeordnet, und in einem Bereich 18 mündet eine Hofeinfahrt auf die Fahrbahn 5. Während die Bereiche 12 und 14 Parkflächen sind, handelt es sich bei den Bereichen 16 und 18 um Nicht-Parkflächen.

Die Figur zeigt ferner ein Messfahrzeug 20, das zumindest einen nicht weiter dargestellten Sensor aufweist, der dazu geeignet ist, Parklückendaten aufzunehmen. Bei dem Sensor kann es sich insbesondere um einen Sensor handeln, der nach einem distanzbasierten Messverfahren arbeitet, etwa einen Radar- oder einen Ultraschallsensor.

Ein Schritt S1 des erfindungsgemäßen Verfahrens beinhaltet, dass das Messfahrzeug 20 mehrere Durchfahrten, zumindest jedoch zwei Durchfahrten, durch den Straßenabschnitt 10 durchführt.

Dabei werden in einem Schritt S2 bei jeder Durchfahrt Parklückendaten entlang des Straßenabschnitts 10 unter anderem mittels des zumindest einen Sensor vorgenommen, wobei die Parklückendaten Parklückendetektionen sowie jeweils zugeordnete Orts- und Zeitinformationen umfassen. Eine Ortsinformation kann hierbei beispielsweise eine entlang des Straßenabschnitts mitlaufende Laufkoordinate sein oder eine GPS-Information. Eine Zeitinformation kann beispielsweise die laufende Nummer der Durchfahrt des Messfahrzeugs 20 durch den Straßenabschnitt 10 sein oder eine Uhrzeit, zu der die Parklückendetektion vorgenommen wurde.

Das Vermessen des Straßenabschnitts durch den Sensor, d.h. die Aufnahme der Parklückendaten, erfolgt bevorzugterweise kontinuierlich oder quasi-kontinuierlich.

Der Begriff "Parklückendetektion" schließt hierbei sowohl die Information ein, dass im Randbereich des Straßenabschnitts 10 an einem bestimmten Ort eine Parklücke detektiert wurde, als auch die Information, dass dort keine Parklücke detektiert wurde.

In einem Schritt S3 werden nun die während einer jeden Durchfahrt erfassten Parklückendaten in einem Datensatz akkumuliert. In Figur 1 ist dies im mittleren Bereich der Abbildung durch eine horizontale Linie 30, welche eine laufende Koordinate des Straßenabschnittes 10 darstellt, und darauf angeordneten Punkten 35 symbolisiert. In der Figur steht jeder Punkt für eine Parklückendetektion. Die dargestellten Parklückendetektionen resultieren aus mehreren Vorbeifahrten von ein oder mehreren Messfahrzeugen 20. Über die Ortsinformation sind die Parklückendetektionen in eine digitale Karte eingearbeitet, weshalb die Parklückendetektionen in Figur 1 als "map matched" Parklückendetektionen bezeichnet sind. Der Datensatz kann dabei in einem geeigneten Speicher des Messfahrzeugs 20 gespeichert werden oder in einem zentralen Serverrechner.

Es ist eine Häufung an Parklückendetektionen im Bereich 18, also der Hofeinfahrt, zu erkennen, da die Fläche in der Regel frei ist und bei annähernd jeder Vorbeifahrt detektiert wird. Aufgrund von Positionierungsgenauigkeiten, die beispielsweise auf ungenauem GPS basieren können, sind die Parklückendetektionen verteilt.

In den Bereichen 12 und 14 ist eine mittlere Häufung an Parklückendetektionen vorhanden, da diese Bereiche, die Parkflächen sind, die meiste Zeit mit parkenden Fahrzeugen beleget sind, allerdings gelegentlich auch frei sind.

In dem Bereich 16, also im Bereich der Baumfläche, ist eine verschwindend geringe Häufung an Parklückendetektionen erkennbar. Diese Parklückendetektionen können beispielsweise vorrichtungsbedingt aus sehr sporadisch auftretenden Fehldetektionen resultieren.

In einem Schritt S4 der Erfindung werden zeitliche Änderungsraten von Parklückendetektionen anhand des Datensatzes ermittelt. Zu diesem Zwecke werden vorteilhafterweise Bündel von Parklückendetektionen anhand der ihnen zugeordneten Ortsinformationen in sogenannte "Bins" 40, 42, 44, 46, 48, 50, 52 einsortiert, was im unteren Teil der Figur 1 dargestellt ist. Ein Bin 40, 42, 44, 46, 48, 50, 52 korrespondiert mit einem Streckenabschnitt bestimmter Länge entlang des Straßenabschnitts 10. Ein Bin 40, 42, 44, 46, 48, 50, 52 ist prinzipiell frei festlegbar und kann beispielsweise eine Länge von 5m haben, was einer mittleren Fahrzeuglänge entspricht. Die Zuordnung einer Parklückendetektion zu einem Bin kann beispielsweise anhand der der jeweiligen Parklückendetektion zugeordneten Ortsinformation erfolgen.

In einem weiteren Schritt S5 der Erfindung werden gültige Parkflächen und/oder Nicht-Parkflächen entlang des Straßenabschnitts auf Grundlage der zeitlichen Änderungsrate verschiedener Parklückendetektionen ermittelt.

Die zeitliche Änderungsrate bildet sich aus der zeitlichen Stabilität an Ereignissen. Bei zeitlich regelmäßig wiederkehrenden Ereignissen ist die zeitliche Änderungsrate gering. Bei zeitlich sporadisch auftretenden Ereignissen ist die zeitliche Änderungsrate hoch. Dabei wird die zeitliche Änderungsrate um die Anzahl an Durchfahrten durch eine Straße normiert.

Im in der Figur 1 dargestellten Beispiel ist in Bin 44 die zeitliche Änderungsrate niedrig, da bei fast jeder Durchfahrt in diesem Bin eine Parklückendetektion vorliegt. Die zeitliche Änderungsrate in Bins 40, 42, 46 und 48 ist hoch, da Parklückendetektionen nur sporadisch und zeitlich unregelmäßig auftreten. In Bin 50 ist die zeitliche Änderungsrate gering, da in diesen Bins bei annähernd keiner Durchfahrt eine Parklückendetektion vorliegt. In Bin 52 ist die zeitliche Änderungsrate gleich Null, da in diesen Bin keine einzelne Parklückendetektion fällt.

Im Beispiel der Figur 1 wird also die zeitliche Änderungsrate der Parklückendetektionen gemäß Schritt S4 für jeweils in einem bin zusammengefasste Parklückendetektionen gemeinsam ermittelt, sodass als Ergebnis dieser Ermittlung jedem bin eine zeitliche Änderungsrate zugeordnet ist, die sich aus den zeitlichen Änderungsraten der in dem bin zusammengefassten Parklückendetektionen ergibt.

Nun können durch Zuordnung der Bins 40, 42, 44, 46, 48, 50 und 52 zu den Bereichen 12, 14, 16 und 18 vorhandene Nicht-Parkflächen, im vorliegenden Fall die Bereiche 16 und 18, und zurzeit freie Parkflächen, im vorliegenden Fall die Bereiche 12 und 14, ermittelt und voneinander getrennt werden.

Gemäß einer Ausführungsform der Erfindung erfolgt in Schritt S5 die Ermittlung von gültigen Parkflächen und/oder Nicht-Parkflächen entlang des Straßenabschnitts anhand der zeitlichen Änderungsrate der jeweiligen Bins, wobei ein jeweiliger Bin anhand der ihm zugeordneten zeitlichen Änderungsrate von Parklückendetektionen als Parkfläche oder als Nicht-Parkfläche klassifiziert wird.

Mit dieser Information kann eine digitale Parkraumkarte generiert werden mit Informationen über Parkflächen, auf denen Fahrzeuge parken dürfen, als auch über Nicht-Parkflächen, auf denen Parken nicht erlaubt ist.

Vorteilhafterweise können die Resultate der zeitlichen Änderungsrate der Parklückendetektionen dazu verwendet werden, die Parametrierung von clusterbasierten Verfahren zum Lernen von Parkflächen und Nicht-Parkflächen zu wählen. Bei nur geringem Abstand der zeitlichen Änderungsrate zwischen den Bins ist die Auftretenswahrscheinlichkeit für Detektionen zwischen Park- und Nicht-Parkflächen annähernd gleich und die Parameter eines Clusteringverfahrens sollten entsprechend konservativ (z.B. bei dichtebasierten Verfahren eine hohe erwartete Dichte) gewählt werden. Umgekehrt kann bei signifikanten Unterschieden in der zeitlichen Änderungsrate von einer hohen Belegungsrate der Parkflächen ausgegangen werden und das Clustering entsprechend breiter parametrisiert werden.

Die Erfindung ist nicht auf das beschriebene und dargestellte Ausführungsbeispiel beschränkt. Sie umfasst vielmehr auch alle fachmännischen Weiterbildungen im Rahmen der durch die Patentansprüche definierten Erfindung.

Neben den beschriebenen und abgebildeten Ausführungsformen sind weitere Ausführungsformen vorstellbar, welche weitere Abwandlungen sowie Kombinationen von Merkmalen umfassen können.

## Patentansprüche

1. Verfahren zum automatisierten Identifizieren von Parkflächen und/oder Nicht-Parkflächen, umfassend die folgenden Schritte:
| | |
|---|---|
| S1 | Durchführen mehrerer Durchfahrten, zumindest jedoch zweier Durchfahrten, durch zumindest einen Straßenabschnitt mit zumindest einem Messfahrzeug (20); |
| S2 | Erfassen von Parklückendaten entlang des Straßenabschnitts (10) während jeder Durchfahrt mittels zumindest einem Sensor des zumindest einen Messfahrzeugs (20), wobei die Parklückendaten Parklückendetektionen sowie jeweils zugeordnete Orts- und Zeitinformationen umfassen; |
| S3 | Akkumulierung der während einer jeden Durchfahrt erfassten Parklückendaten in einem Datensatz; |
| S4 | Ermittlung einer zeitlichen Änderungsrate von Parklückendetektionen anhand des Datensatzes; und |
| S5 | Ermittlung von gültigen Parkflächen und/oder Nicht-Parkflächen entlang des Straßenabschnitts (10) auf Grundlage der zeitlichen Änderungsrate verschiedener Parklückendetektionen; |
wobei die Parklückendaten sogenannten Bins (40, 42, 44, 46, 48, 50, 52) zugeordnet werden, wobei ein Bin (40, 42, 44, 46, 48, 50, 52) einen definierten Abschnitt entlang des Straßenabschnittes (10) bezeichnet, und
wobei die Zuordnung einer Parklückendetektion zu einem Bin (40, 42, 44, 46, 48, 50, 52) insbesondere anhand der der jeweiligen Parklückendetektion zugeordneten Ortsinformation erfolgt;
und wobei die zeitliche Änderungsrate der Parklückendetektionen gemäß Schritt S4 für jeweils in einem Bin (40, 42, 44, 46, 48, 50, 52) zusammengefasste Parklückendetektionen gemeinsam ermittelt wird, sodass als Ergebnis dieser Ermittlung jedem Bin (40, 42, 44, 46, 48, 50, 52) eine zeitliche Änderungsrate zugeordnet ist, die sich aus den zeitlichen Änderungsraten der in dem Bin (40, 42, 44, 46, 48, 50, 52) zusammengefassten Parklückendetektionen ergibt, wobei die Parklückendetektionen sowie die Parkflächen und/oder Nicht-Parkflächen in eine digitale Parkraumkarte eingearbeitet werden.

2. Verfahren nach Anspruch 1, **dadurch gekennzeichnet, dass** in Schritt S5 die Ermittlung von gültigen Parkflächen und/oder Nicht-Parkflächen entlang des Straßenabschnitts (10) anhand der zeitlichen Änderungsrate der jeweiligen Bins (40, 42, 44, 46, 48, 50, 52) erfolgt, wobei ein jeweiliger Bin (40, 42, 44, 46, 48, 50, 52) anhand der ihm zugeordneten zeitlichen Änderungsrate von Parklückendetektionen als Parkfläche oder als Nicht-Parkfläche klassifiziert wird.

3. Verfahren nach einem der vorstehenden Ansprüche, **dadurch gekennzeichnet, dass** der in Schritt S2 zum Erfassen von Parklückendaten verwendete Sensor nach einem distanzbasierten Messverfahren arbeitet.

4. Verfahren nach einem der vorstehenden Ansprüche, **dadurch gekennzeichnet, dass** die in Schritt S3 durchgeführte Akkumulierung wenigstens teilweise lokal in dem Messfahrzeug (20) und/oder wenigstens teilweise in einer zentralen Servereinrichtung erfolgt.

5. Verfahren nach einem der vorstehenden Ansprüche, **dadurch gekennzeichnet, dass** die ermittelten zeitlichen Änderungsraten der Parklückendetektionen dazu verwendet werden, eine Parametrierung von clusterbasierten Verfahren zum Lernen von Parkflächen und Nicht-Parkflächen zu wählen.

6. Vorrichtung zum automatisierten Identifizieren von Parkflächen und/oder Nicht-Parkflächen, aufweisend ein Messfahrzeug (20) mit zumindest einem Sensor, wobei mittels dem Sensor Daten bezüglich eines Parkraums entlang des Straßenabschnitts (10) während jeder Durchfahrt erfassbar sind, ferner aufweisend eine Steuereinrichtung, wobei die Steuervorrichtung dazu ausgelegt ist, ein Verfahren nach einem der Ansprüche 1 bis 5 durchzuführen.

7. Vorrichtung nach Anspruch 6, wobei das Messfahrzeug (20) wenigstens eine Kommunikationseinrichtung zum Übermitteln der Daten an eine Servereinrichtung aufweist.

8. Vorrichtung nach Anspruch 6 oder 7, wobei der Sensor als Ultraschallsensor oder Radarsensor ausgeführt ist.

9. Computerprogramm mit Programmcodemitteln zum Ausführen des Verfahrens nach einem der Ansprüche 1 bis 5, wenn es auf einer Vorrichtung zum automatisierten Identifizieren von Parkflächen und/oder Nicht-Parkflächen ausgeführt wird.

## Claims

1. Method for the automated identification of parking areas and/or non-parking areas, comprising the following steps:
| | |
|---|---|
| S1 | Performing a plurality of passes, but at least two passes, through at least one road section with at least one measuring vehicle (20); |
| S2 | Capturing parking space data along the road section (10) during each pass by means of at least one sensor of the at least one measuring vehicle (20), wherein the parking space data comprise detected parking spaces as well as respectively assigned location and time information; |
| S3 | Accumulating the parking space data captured during each pass in a data set; |
| S4 | Determining a temporal rate of change of detected parking spaces based on the data set; and |
| S5 | Determining valid parking areas and/or non-parking areas along the road section (10) based on the temporal rate of change of various detected parking spaces; |
wherein the parking space data are assigned to so-called bins (40, 42, 44, 46, 48, 50, 52), where a bin (40, 42, 44, 46, 48, 50, 52) indicates a defined section along the road section (10), and wherein a detected parking space is assigned to a bin (40, 42, 44, 46, 48, 50, 52) in particular based on the location information assigned to the respective detected parking space;
and wherein the temporal rate of change of the detected parking spaces is determined jointly according to step S4 for detected parking spaces respectively combined in a bin (40, 42, 44, 46, 48, 50, 52), and so, as a result of this determination, each bin (40, 42, 44, 46, 48, 50, 52) is assigned a temporal rate of change that results from the temporal rates of change of the detected parking spaces combined in the bin (40, 42, 44, 46, 48, 50, 52), wherein the detected parking spaces as well as the parking areas and/or non-parking areas are incorporated in a digital parking space map.

2. Method according to Claim 1, **characterized in that**, in step S5, valid parking areas and/or non-parking areas along the road section (10) are determined based on the temporal rate of change of the respective bins (40, 42, 44, 46, 48, 50, 52), wherein a respective bin (40, 42, 44, 46, 48, 50, 52) is classified as a parking area or as a non-parking area on the basis of the temporal rate of change of detected parking spaces that is assigned to it.

3. Method according to one of the preceding claims, **characterized in that** the sensor used in step S2 to capture parking space data works according to a distance-based measuring method.

4. Method according to one of the preceding claims, **characterized in that** the accumulation carried out in step S3 takes place at least partially locally in the measuring vehicle (20) and/or at least partially in a central server device.

5. Method according to one of the preceding claims, **characterized in that** the determined temporal rates of change of the detected parking spaces are used to select a parameterization of cluster-based methods for learning parking areas and non-parking areas.

6. Apparatus for the automated identification of parking areas and/or non-parking areas, having a measuring vehicle (20) with at least one sensor, wherein data relating to a parking space along the road section (10) can be captured by means of the sensor during each pass, further having a control device, wherein the control apparatus is designed to carry out a method according to one of Claims 1 to 5.

7. Apparatus according to Claim 6, wherein the measuring vehicle (20) has at least one communication device for transmitting the data to a server device.

8. Apparatus according to Claim 6 or 7, wherein the sensor is designed as an ultrasonic sensor or radar sensor.

9. Computer program with program code means for carrying out the method according to one of Claims 1 to 5 when it is executed on an apparatus for the automated identification of parking areas and/or non-parking areas.

## Revendications

1. Procédé d'identification automatisée de surfaces de stationnement et/ou de surfaces de non stationnement, comprenant les étapes consistant à :
| | |
|---|---|
| S1 | effectuer une pluralité de passages, toutefois au moins deux passages, à travers au moins une section de route à l'aide d'au moins un véhicule de mesure (20) ; |
| S2 | détecter des données d'espace de stationnement le long de la section de route (10) lors du passage respectif au moyen d'au moins un capteur de l'au moins un véhicule de mesure (20), les données d'espace de stationnement comprenant des détections d'espace de stationnement ainsi que des informations de position et des informations temporelles respectivement associées ; |
| S3 | accumuler les données d'espace de stationnement acquises lors du passage respectif dans un ensemble de données ; |
| S4 | déterminer un taux de changement temporel des détections d'espace de stationnement sur la base de l'ensemble de données ; et |
| S5 | déterminer des surfaces de stationnement et/ou des surfaces de non stationnement valides le long de la section de route (10) en fonction du taux de changement temporel des différentes détections d'espace de stationnement ; |
dans lequel les données d'espace de stationnement sont attribuées à des éléments appelés cases (40, 42, 44, 46, 48, 50, 52), une case (40, 42, 44, 46, 48, 50, 52) désignant une section définie le long de la section de route (10), et l'attribution d'une détection d'espace de stationnement à une case (40, 42, 44, 46, 48, 50, 52) s'effectuant en particulier sur la base des informations de position attribuées à la détection d'espace de stationnement respective ;
et dans lequel le taux de changement temporel des détections d'espace de stationnement selon l'étape S4 est déterminé conjointement pour les détections d'espace de stationnement respectivement regroupées dans une case (40, 42, 44, 46, 48, 50, 52), de sorte qu'il résulte de cette détermination qu'un taux de changement temporel est attribué à chaque case (40, 42, 44, 46, 48, 50, 52), lequel taux résulte des taux de changement temporel des détections d'espace de stationnement regroupées dans la case (40, 42, 44, 46, 48, 50, 52), les détections d'espace de stationnement ainsi que les surfaces de stationnement et/ou les surfaces de non stationnement étant intégrées dans une carte numérique des espaces de stationnement.

2. Procédé selon la revendication 1, **caractérisé en ce que**, lors de l'étape S5, la détermination de surfaces de stationnement et/ou de surfaces de non stationnement valides le long de la section de route (10) s'effectue sur la base du taux de changement temporel des cases (40, 42, 44, 46, 48, 50, 52) respectives, une case (40, 42, 44, 46, 48, 50, 52) respective étant classée comme surface de stationnement ou comme surface de non stationnement sur la base du taux de changement temporel de détections d'espace de stationnement qui lui est attribué.

3. Procédé selon l'une quelconque des revendications précédentes, **caractérisé en ce que** le capteur utilisé lors de l'étape S2 pour détecter des données d'espace de stationnement fonctionne selon un procédé de mesure basé sur la distance.

4. Procédé selon l'une quelconque des revendications précédentes, **caractérisé en ce que** l'accumulation effectuée lors de l'étape S3 s'effectue au moins en partie localement dans le véhicule de mesure (20) et/ou au moins en partie dans une installation de serveur centrale.

5. Procédé selon l'une quelconque des revendications précédentes, **caractérisé en ce que** les taux de changement temporel des détections d'espace de stationnement déterminés sont utilisés pour choisir un paramétrage de procédés basés sur le regroupement pour l'apprentissage de surfaces de stationnement et de surfaces de non stationnement.

6. Dispositif d'identification automatisée de surfaces de stationnement et/ou de surfaces de non stationnement, comportant un véhicule de mesure (20) pourvu d'au moins un capteur, des données relatives à un espace de stationnement le long de la section de route (10) pouvant être détectées au moyen du capteur lors de chaque passage, comportant en outre un dispositif de commande, le dispositif de commande étant conçu pour mettre en œuvre un procédé selon l'une quelconque des revendications 1 à 5.

7. Dispositif selon la revendication 6, dans lequel le véhicule de mesure (20) comporte au moins un dispositif de communication destiné à transmettre les données à une installation de serveur.

8. Dispositif selon la revendication 6 ou 7, dans lequel le capteur est réalisé sous forme de capteur à ultrasons ou de capteur radar.

9. Programme informatique comportant des moyens à code de programme destinés à mettre en œuvre le procédé selon l'une quelconque des revendications 1 à 5 lorsqu'il est exécuté sur un dispositif d'identification automatisée de surfaces de stationnement et/ou de surfaces de non stationnement.
